# EUROPEAN PATENT APPLICATION

(11) **EP 4 679 150 A1**
(43) Date of publication of application: **14.01.2026**
(21) Application number: 24187931.1
(22) Date of filing: 11.07.2024
(51) Int. Cl.: G02B 6/293, G02B 6/42, H04B 10/25

(54) **PASSIVE OPTICAL NETWORK DUAL-SYSTEM FOCUSING DEVICE**

(71) Applicant: Ezconn Corporation, New Taipei City 251 (TW)
(72) Inventor: WU, Chin-Tsung, 251 New Taipei City (TW)
(74) Representative: Michalski Hüttermann & Partner Patentanwälte mbB

(57) **Abstract**

The present invention relates to a passive optical network dual-system focusing device, which comprises an optical guiding unit, an optical path conversion unit, and an optical receiving and transmitting unit. The optical guiding unit is connected to an optical fiber and is adapted to transmit optical signals. The optical path conversion unit is connected to the optical guiding unit, is adapted to receive optical signals, and changes the optical path of the optical signals. The device is configured with two receiving units and two transmitting units in the optical receiving and transmitting unit, and can simultaneously support the use of two communication protocol systems on the same optical path.

## Description

### TECHNICAL FIELD

The present invention relates to an optical module, particularly to a passive optical network system that support the use of two communication protocol systems on the same optical path.

### BACKGROUND

With the increasing demand for high performance and speed, the use of optical fibers in communication has become more widespread. In optical communication systems, light is used to transmit data over long distances via optical pulses instead of electrical currents through optical fibers. Optical transceivers are important elements of communication systems and can be classified based on the fiber mode, transmission rate, distance, wavelength, and connector type. In the field of optical fiber cable communication, the transceiver plays a pivotal role and its main function is to convert optical signals into electrical signals, or vice versa. One type of transceiver is a bidirectional optical sub-assembly (BOSA), which consists of a bidirectional optical sub-element.

BOSA uses two independent wavelength channels, one for transmitting and receiving between a single optical fiber and interconnecting devices, with the transmitting wavelength on one end matching the receiving wavelength on the other end. BOSA can send (Tx) and receive (Rx) data.

Generally, BOSA is composed of an optical transmitter, which includes a laser diode, an optical receiver with an optical source, a filter that allows light of one wavelength to pass through but reflects light of another wavelength, and an optical transceiver that can simultaneously output transmit light and input receive light, all enclosed in a casing. Tx data is transmitted through the wavelength filter after passing through the optical transmitter and then transmitted to the optical fiber in the optical connector, while Rx data is transmitted through the filter after passing through the optical fiber and then transmitted to the optical receiver.

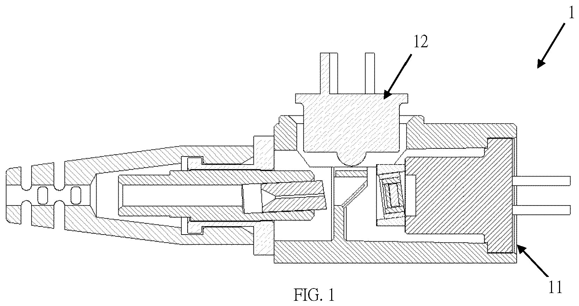

For example, in a prior art, an optical transmission sub-module is provided as shown in Figure 1. In this prior art, the optical transmission sub-module 1 includes an optical transmitter 11 that can simultaneously output and receive light and an optical receiver 12 with an optical receiving source, which means that this structure is only applicable to a system of one communication protocol. However, as the demand for data transmission speed increases, old network systems need to be upgraded to new systems to accommodate large and fast data transmission. In the upgrading process, there is a transitional period, which means that the users who maintain the old network system and upgrade to the new network system still need to be served simultaneously. When the data modem in an office building or switching station requires two systems, it is impossible to use a single data modem to solve the problem. Therefore, improving the structure of the optical transmission sub-module to cope with the situation of simultaneously serving two systems has become an important issue to be considered in the field of fiber optic cable communication.

In view of the above, it is known that there are many bottlenecks in the existing technology. The present invention overcomes the above problems and proposes a practical passive optical network dual-system focusing device.

### SUMMARY

One objective of the present invention is to provide a passive optical network dual-system focusing device that can support the use of two communication systems simultaneously, thereby solving the problem of needing to re-layout fiber transmission lines and replace data modems in existing technology.

Another objective of the present invention is to provide a passive optical network dual-system focusing device that can accommodate two sets of receiving and transmitting elements in a small space, thereby solving the problem of only being able to set up one set of receiving and transmitting elements in existing technology.

To achieve the above objectives, the present invention proposes a passive optical network dual-system focusing device, which includes an optical guiding unit, an optical path conversion unit, and an optical receiving and transmitting unit. The optical guiding unit is connected to an optical fiber and is suitable for transmitting at least one optical signal, which is not a single wavelength. The optical path conversion unit is connected to the optical guiding unit and is suitable for receiving the at least one optical signal and changing the optical path of the at least one optical signal. The optical path conversion unit sequentially includes a first filter, a second filter, a focusing adjusting lens, and a third filter along the direction towards the optical guiding unit. The optical receiving and transmitting unit is suitable for receiving and transmitting the at least one optical signal and is suitable for two sets of communication protocol systems. The optical receiving and transmitting unit includes a first receiving element, a second receiving element, a third transmitting element, and a fourth transmitting element. The first receiving element corresponds to the first filter. The second receiving element corresponds to the second filter. The third transmitting element corresponds to the third filter. The fourth transmitting element corresponds to the third filter. The first receiving element and the second receiving element correspond to one of the third transmitting element and the fourth transmitting element respectively.

In some embodiments of the present invention, when at least one optical signal is transmitted to the first filter, the incident angle of the at least one optical signal entering the first filter is between 40 and 50 degrees.

In some embodiments of the present invention, when at least one optical signal is transmitted to the second filter, the incident angle of the at least one optical signal entering the second filter is between 40 and 50 degrees.

In some embodiments of the present invention, when at least one optical signal is transmitted to the third filter, the incident angle of the at least one optical signal entering the third filter is between 40 and 50 degrees.

In some embodiments of the present invention, the first receiving element is capable of receiving a wavelength range between 1575 nm and 1580 nm.

In some embodiments of the present invention, the second receiving element is capable of receiving a wavelength range between 1480 nm and 1500 nm.

In some embodiments of the present invention, the third transmitting element is capable of emitting a wavelength range between 1300 nm and 1320 nm.

In some embodiments of the present invention, the fourth transmitting element is capable of emitting a wavelength range between 1260 nm and 1280 nm.

In some embodiments of the present invention, the transmission power between the third transmitting element and the fourth transmitting element is reduced by an attenuation device.

In some embodiments of the present invention, the outer diameter of the focusing adjustment lens is between 1.3mm and 2.3mm.

In some embodiments of the present invention, the length of the focusing adjustment lens is between 1.1mm and 1.7mm.

In some embodiments of the present invention, the distance between the focusing adjustment lens and the optical fiber is between 2mm and 3mm.

In some embodiments of the present invention, the distance between the focusing adjustment lens and the third filter is between 3mm and 4mm.

In some embodiments of the present invention, the distance between the first receiving element and the first filter is between 1.5mm and 2.1mm.

In some embodiments of the present invention, the distance between the second receiving element and the second filter is between 0.9mm and 1.5mm.

In some embodiments of the present invention, the distance between the third filter and at least one of the third transmitting element and the fourth transmitting element is between 2mm and 7mm.

In some embodiments of the present invention, the distance between the third filter and the third transmitting element is between 2mm and 3mm.

In some embodiments of the present invention, the distance between the third filter and the fourth transmitting element is between 5mm and 7mm.

In some embodiments of the present invention, the thickness of at least one of the first filter, the second filter, and the third filter is between 0.1mm and 0.3mm.

In some embodiments of the present invention, wherein the focusing adjustment lens adjusts the optical path of at least one optical signal to at least one of the first receiving element, the second receiving element, the third transmitting element, and the fourth transmitting element.

In some embodiments of the present invention, the optical guiding unit further comprises a housing, a fiber stub, a sleeve, a stopper, and an OTDR filter, and the fiber passing through the fiber stub and having a light outlet, wherein the OTDR filter partially connected to the fiber stub and covering the light outlet.

In some embodiments of the present invention, the OTDR filter is installed inside the optical guiding unit and reflects a specific wavelength emitted by the OTDR to detect signals from the optical fiber.

In some embodiments of the present invention, the OTDR filter is made of optical glass.

In some embodiments of the present invention, the size of the OTDR filter is 1.4 mm × 0.6 mm × 0.1 mm.

In some embodiments of the present invention, the end face of the fiber stub is polished at an angle between 4 degrees and 8 degrees, such as the end face of the fiber stub is polished at the angle of 4 degrees, 6 degrees, 8 degrees or any degrees between 4 degrees and 8 degrees.

In some embodiments of the present invention, the first side surface of the OTDR filter faces the light outlet and has a reflective coating layer.

In summary, the present invention provides a passive optical network dual-system focusing device that utilizes a configuration of two receivers and two transmitters in an optical transceiver unit, capable of simultaneously supporting two communication protocols on the same optical path. In addition, by setting the angle of each filter in the optical path conversion unit, two sets of receivers and transmitters can be installed in a small space without increasing the overall footprint, while maintaining good signal transmission performance.

The foregoing and other elements, steps, features, benefits, and advantages of the present invention will be made clear from the following detailed description of exemplary embodiments, accompanying drawings, and the appended claims.

### BRIEF DESCRIPTION OF THE DRAWINGS

Other features and advantages of the present invention will become apparent from the following detailed description with reference to the accompanying drawings, in which:
FIG. 1 is a schematic diagram of a structure of a sub-module for optical transmission known in the art;
FIG. 2 is a schematic diagram of a structure of a passive optical network dual system focusing device of the present invention;
FIG. 3 is a schematic diagram of a cross-sectional view of the passive optical network dual system focusing device of the present invention; and
FIG. 4 is a schematic diagram of a cross-sectional view of the passive optical network dual system focusing device of the present invention with light path included.
FIG. 5 depicts a schematic of a plurality of lights traveling paths within the optical guiding unit passing to the OTDR filter.
FIG. 6 depicts an enlarged perspective view of the dashed-circle region in FIG. 5.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings but are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

The embodiment disclosed in the present invention is a passive optical network dual system focusing device. For example, the passive optical network dual system focusing device can be installed in a user-side optical network unit (ONU) of a passive optical network (PON) system, which is a fiber-to-the-curb (FTTC), fiber-to-the-building (FTTB), or fiber-to-the-home (FTTH) system, adopting a point-to-multipoint network architecture, and systems and equipment used in remote user residences with FTTC, FTTB, and FTTH.

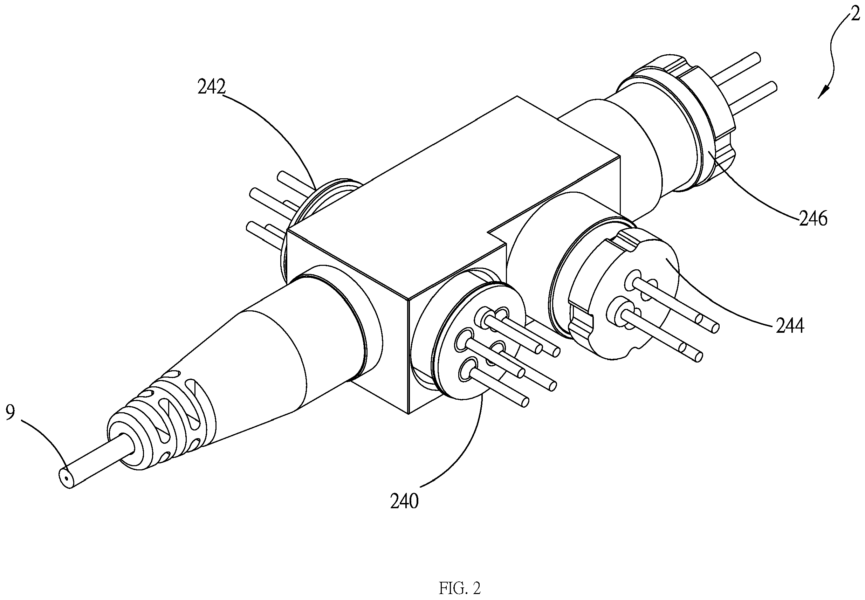

First, the structure and partial functions of the passive optical network dual system focusing device in this case will be described. Please refer to Figure 2, which is a schematic diagram of the structure of the passive optical network dual system focusing device of the present invention. The passive optical network dual system focusing device 2 includes an optical guide unit 20, an optical path conversion unit 22, and an optical receiving and transmitting unit. The optical guide unit 20 is connected to the optical fiber 9 and is suitable for outputting optical signals. The optical path conversion unit 22 is connected to the optical guide unit 20 and is suitable for receiving optical signals and changing the optical path of the optical signals. The optical receiving and transmitting unit is suitable for receiving and transmitting optical signals and includes a first receiving element 240, a second receiving element 242, a third transmitting element 244, and a fourth transmitting element 246. In other words, the receiving elements and transmitting elements are paired, and the installation positions of the receiving and transmitting elements in Figure 2 are just an embodiment of the present invention, the positions of the receiving and transmitting elements can be changed due to requirements.

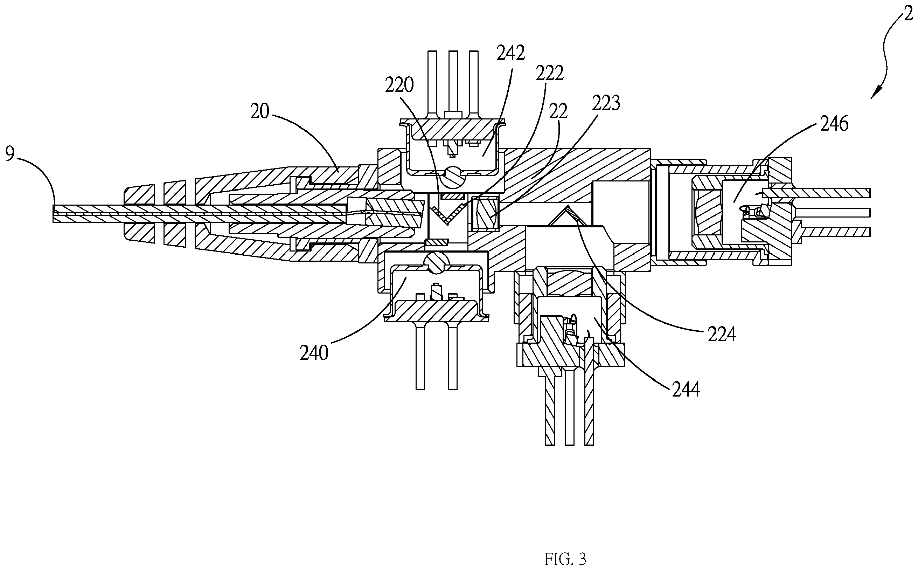

Next, the internal structure of the passive optical network dual system focusing device of the present invention is further revealed by a cross-sectional view. Please refer to Figure 3, which is a schematic diagram of the structure of a cross-section of the passive optical network dual system focusing device of the present invention. The passive optical network dual system focusing device 2 includes an optical guiding unit 20, an optical path conversion unit 22, and an optical receiving and transmitting unit. The optical path conversion unit 22 is connected to the optical guiding unit 20 and sequentially includes a first filter 220, a second filter 222, a focusing adjustment lens 223, and a third filter 224 in the direction towards the optical guiding unit 20. The optical receiving and transmitting unit includes a first receiving element 240, a second receiving element 242, a third transmitting element 244, and a fourth transmitting element 246. The first receiving element 240 corresponds to the first filter 220, the second receiving element 242 corresponds to the second filter 222, the third transmitting element 244 corresponds to the third filter 224, and the fourth transmitting element 246 corresponds to the third filter 224.

The design positions of the aforementioned filters, receivers, and transmitters will be further explained here. It should be noted that since the device capable of accommodating the present module is usually in a relatively narrow space, how to achieve a good balance between simplifying the arrangement of elements and reducing the overall space is the main consideration when designing the positions of the aforementioned elements. In this case, the primary consideration is whether the transmission path of the optical signal is blocked. Once the optical signal is blocked, the transmission effect will inevitably be reduced, so it is necessary to provide appropriate installation space for the receiver and/or transmitter. However, any movement of the receiver and/or transmitter will increase the collision between elements. In addition, when moving the receiver and/or transmitter, the focusing adjustment lens and filter inside the optical path conversion unit also need to be adjusted accordingly. In order to reduce the effect of the optical spot on signal transmission, the filter at the transmitting end is usually installed near the optical focus of the transmitter. A small filter can be used to save space. Therefore, the design of elements in the optical adjustment unit is a great challenge.

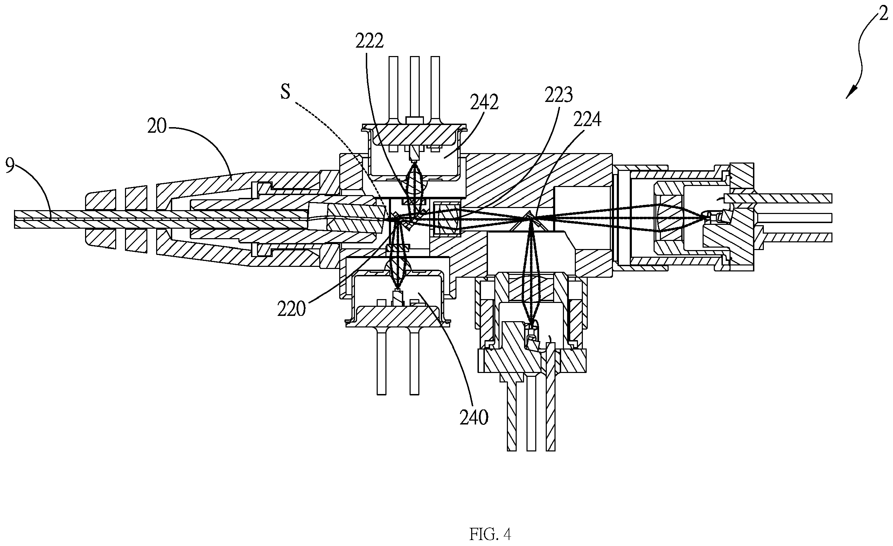

In view of the above considerations, the detailed path of light in the optical path conversion unit will be further explained here. Please refer to FIG. 3 and also refer to FIG. 4 at the same time. FIG. 4 is a schematic diagram of the structure of the optical path in a cross-sectional view of the passive optical network dual-system focusing device of the present invention. Since the filtering wavelengths of each filter are determined based on the requirements of the corresponding receiving and/or transmitting elements, the description in this application is based solely on the angles of the filters. The angle of the filter is defined by the angle at which the light enters the filter. That is, in the passive optical network dual-system focusing device 2 described in the present invention, when the light signal S (dotted line) is transmitted to the first filter 220, the incident angle of the light signal S entering the first filter 220 is 40 to 45 degrees; when the light signal S is transmitted to the second filter 222, the incident angle of the light signal S entering the second filter 222 is 40 to 45 degrees; when the light signal S is transmitted to the third filter 224, the incident angle of the light signal S entering the third filter 224 is 40 to 45 degrees. In this embodiment, only the reference angle of 45 degrees is shown.

It should be noted that the light signal in this application is not a single wavelength, and in different wavelength situations, if the light signal is directly transmitted to the optical guide unit, it may be interfered and cause poor reception. Therefore, in the prior art, parallel light lenses are often used to compensate for the above shortcomings. However, when using parallel light lenses, more lenses need to be set up to achieve the purpose of extending the focal length, and the cost of parallel light lenses is higher. If a large-scale production is required, it will inevitably cost more, and when the internal elements increase, the arrangement and design of the elements must be reconsidered. In the passive optical network dual-system focusing device of this application, a focusing adjustment lens is provided, which can be used to adjust the optical signal emitted from the optical fiber to the optical path of at least one of the first receiving element, the second receiving element, the third transmitting element, and the fourth transmitting element.

In the passive optical network dual-system focusing device of this case, the first receiving element receives wavelengths ranging from 1575nm to 1580nm. The second receiving element receives wavelengths ranging from 1480nm to 1500nm. The third transmitting element emits wavelengths ranging from 1300nm to 1320nm. The fourth transmitting element emits wavelengths ranging from 1260nm to 1280nm. The wavelength range difference between the third transmitting element and the fourth transmitting element is not greater than 60nm.

In this embodiment, the at least one optical signal is adjusted to the optical path of at least one of the first receiving element, the second receiving element, the third transmitting element, and the fourth transmitting element by focusing and adjusting the lens. Therefore, the structure of the focusing and adjusting lens and the distance to the corresponding optical receiving and transmitting elements are important factors. In this embodiment, the outer diameter of the focusing and adjusting lens is between 1.3mm and 2.3mm, and the length of the focusing and adjusting lens is between 1.1mm and 1.7mm. The distance from the focusing and adjusting lens to the optical fiber is between 2mm and 3mm. The distance from the focusing and adjusting lens to the third filter is between 3mm and 4mm. It should be noted that the distance from the focusing and adjusting lens to each element is measured from the center point of the focusing and adjusting lens, the distance to the optical fiber is the distance to the optical signal exit, the distance to the receiving element is the distance to the top of the receiving element, and the distance to the transmitting element is the distance to the transmitting base.

Additionally, since the focal length affects the optical transmission loss and is one of the bases for component placement, the distances between each receiver and each transmitter to the filter are critically important. In this embodiment, the distance from the first receiving element to the first filter is between 2mm and 2.3mm. The distance from the second receiving element to the second filter is between 1.5mm and 2.1mm. The distance between the third filter and at least one of the third transmitting element and the fourth transmitting element is between 2mm and 7mm. The distance between the third filter and the third transmitting element is between 2mm and 3mm. The distance between the third filter and the fourth transmitting element is between 5mm and 7mm. The thickness of at least one of the first filter, the second filter, and the third filter is between 0.1mm and 0.3mm.

By using the passive optical network dual-system focusing device of the present invention, two communication protocol systems can be provided simultaneously in the same structure. For example, both GPON (Gigabit-Capable Passive Optical Network) and XGS-PON (10 Gigabit-Capable Symmetric Passive Optical Network) systems can be served simultaneously. Of course, the above communication systems are only examples, and any communication system that can be applied to the passive optical network dual-system focusing device of the present invention should not exceed the scope of this invention.

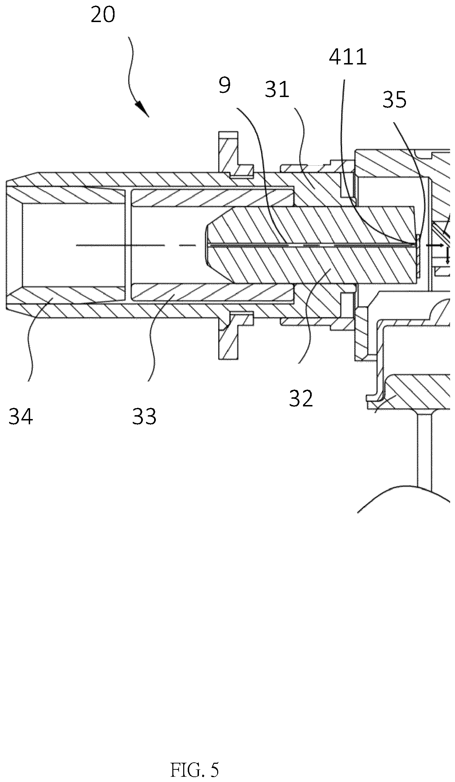

For some specific applications, the present invention provides a passive optical network dual-system focusing device comprising an optical guiding unit 2, as shown in FIG. 5, including a housing 31, a fiber stub 32, a sleeve 33, a stopper 34, and an OTDR filter 35. The housing 31 is usually made of metal. Wherein, fiber 9 passes through the fiber stub 32 and has a light outlet 411. The OTDR filter 35 is partially connected to the fiber stub 32 and covers the light outlet 411.

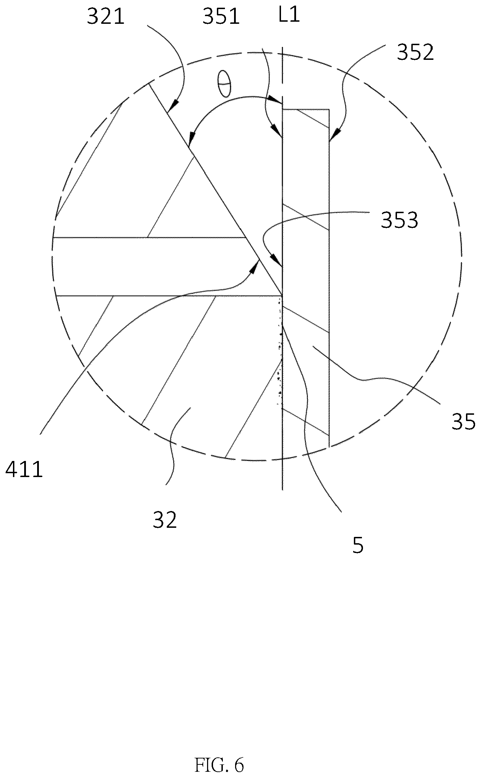

Referring to FIG. 5 and FIG. 6, an end face 321 of the fiber stub 32 is polished. There is an angle 8 from four degrees to eight degrees on the end face 321 of the fiber stub 32 that relates to a virtual line L1 which is perpendicular to the fiber 9. The OTDR filter 35 has a first side surface 351 facing the light outlet 411 and a second side surface 352 opposite to the first side surface 351. The fiber stub 32 is connected to the lower half of the first side surface 351 of the OTDR filter 35 through an adhesive 5, excluding the region 353 covering the light outlet 411. In order to get the OTDR filter 35 as close to the light outlet 411 as possible, the adhesive 5 should be as thin as possible. The adhesive 5 should not seep out the light outlet 411. In this embodiment, the OTDR filter 35 is made of optical glass, and the size of the OTDR filter 35 is 1.4 mm x 0.6 mm x 0.1 mm. The first side surface 351 of the OTDR filter 35 is coated with a coating layer to reflect the OTDR monitoring light from the optical line terminal (OLT) end. In this embodiment, the OTDR monitoring light wavelength ranges from 1615 to 1660nm. The OTDR filter 35 can provide the effect of reflecting OTDR monitoring light with a reflectivity between 20% and 50%. As for the material of the reflective coating layer, the reflective coating layer of the first side surface 351 of the OTDR filter 35 can be made of pure material or composite material according to the requirements of different OTDR monitoring light wavelengths or specific applications. Additionally, the end face of the fiber stub 32 is polished at an angle between 4 degrees and 8 degrees, such as the end face of the fiber stub is polished at the angle of 4 degrees, 6 degrees, 8 degrees or any degrees between 4 degrees and 8 degrees.

In some embodiments, the OTDR monitoring light wavelength can also use other wavelength bands conforming to the optical communication protocol, such as the OTDR monitoring light with a central wavelength of 1310 nm. In some embodiments, the second side surface 352 of the OTDR filter 35 is coated with an anti-reflection layer. The anti-reflection layer can not only improve the light transmittance but also provide an anti-mold effect.

As the OTDR optical reflector (OTDR filter) is installed inside the optical sub-assembly, it has the advantages of saving space and saving costs by omitting the conventional FBG and can also achieve the same effect as reflecting the OTDR monitoring light.

Accordingly, the present invention discloses a passive optical network dual-system focusing device, which has the following advantages:

1. By integrating dual-system components into the same module, when replacing or using two communication systems simultaneously, there is no need to disassemble additional hardware devices such as data modems, greatly reducing the cost of system replacement.

2. By setting the focusing adjustment lens through the focusing adjustment, the optical signal can be directly adjusted for focal length inside, which improves the quality of the light signal received by the receiving element.

3. By the design of focusing adjustment lens, the occupied space is smaller and the cost is lower, which not only increases the feasibility of other component design arrangements, greatly saves overall space, but also reduces the problem of higher component cost.

4. By detecting the reflected signal and determining its origin at the user endpoint, the system can confirm that the fiber optic line is operating normally. The key objective of this technology is to enhance the system's ability to accurately assess the status of fiber optic networks, particularly in environments with multiple endpoints and wavelengths.

5. The design of the OTDR reflection filter considers the potential coexistence of multiple wavelengths within the system. One of its primary functions is to reflect light signals at specific wavelengths without affecting the transparency of other wavelength signals. This ensures that the system can use OTDR for precise location determination while maintaining uninterrupted communication for other optical fiber transmissions.

The presently disclosed inventive concepts are not intended to be limited to the embodiments shown herein, but are to be accorded their full scope consistent with the principles underlying the disclosed concepts herein. Directions and references to an element, such as "up," "down,", "upper," "lower," "horizontal," "vertical," "left," "right," and the like, do not imply absolute relationships, positions, and/or orientations. Terms of an element, such as "first" and "second" are not literal, but, distinguishing terms. As used herein, terms "comprises" or "comprising" encompass the notions of "including" and "having" and specify the presence of elements, operations, and/or groups or combinations thereof and do not imply preclusion of the presence or addition of one or more other elements, operations and/or groups or combinations thereof. Sequence of operations do not imply absoluteness unless specifically so stated. Reference to an element in the singular, such as by use of the article "a" or "an", is not intended to mean "one and only one" unless specifically so stated, but rather "one or more". As used herein, "and/or" means "and" or "or", as well as "and" and "or." As used herein, ranges and subranges mean all ranges including whole and/or fractional values therein and language which defines or modifies ranges and subranges, such as "at least," "greater than," "less than," "no more than," and the like, mean subranges and/or an upper or lower limit. All structural and functional equivalents to the elements of the various embodiments described throughout the disclosure that are known or later come to be known to those of ordinary skill in the relevant art are intended to be encompassed by the features described and claimed herein. Moreover, nothing disclosed herein is intended to be dedicated to the public regardless of whether such disclosure may ultimately explicitly be recited in the claims. No element or concept disclosed herein or hereafter presented shall be construed under the provisions of 35 USC 112(f) unless the element or concept is expressly recited using the phrase "means for" or "step for".

In view of the many possible embodiments to which the disclosed principles can be applied, we reserve the right to claim any and all combinations of features and acts described herein, including the right to claim all that comes within the scope and spirit of the foregoing description, as well as the combinations recited, literally and equivalently, in the following claims and any claims presented anytime throughout prosecution of this application or any application claiming benefit of or priority from this application.

## Claims

**1.** A passive optical network dual-system focusing device comprising:
an optical guiding unit connected to an optical fiber and capable of transmitting at least one optical signal, wherein the at least one optical signal is not a single wavelength;
an optical path conversion unit connected to the optical guiding unit and capable of receiving the at least one optical signal and changing the optical path of the at least one optical signal, the optical path conversion unit includes a first filter, a second filter, a focusing adjustment lens, and a third filter in sequence in the direction towards the optical guiding unit; and
an optical receiving and transmitting unit capable of receiving and transmitting the at least one optical signal, suitable for two communication protocol systems, wherein the optical receiving and transmitting unit includes:
a first receiving element corresponding to the first filter;
a second receiving element corresponding to the second filter;
a third transmitting element corresponding to the third filter; and
a fourth transmitting element corresponding to the third filter;
wherein the first receiving element and the second receiving element are respectively set corresponding to one of the third transmitting element and the fourth transmitting element.

**2.** The passive optical network dual-system focusing device according to any of the previous claims, wherein the incident angle of the at least one optical signal entering the first filter when the at least one optical signal is transmitted to the first filter is between 40 degrees and 50 degrees.

**3.** The passive optical network dual-system focusing device according to any of the previous claims, wherein the incident angle of the at least one optical signal entering the second filter when the at least one optical signal is transmitted to the second filter is between 40 degrees and 50 degrees.

**4.** The passive optical network dual-system focusing device according to any of the previous claims, wherein the incident angle of the at least one optical signal entering the third filter when the at least one optical signal is transmitted to the third filter is between 40 degrees and 50 degrees.

**5.** The passive optical network dual-system focusing device according to any of the previous claims, wherein the first receiving element is capable of receiving a wavelength range between 1575 nm and 1580 nm.

**6.** The passive optical network dual-system focusing device according to any of the previous claims, wherein the second receiving element is capable of receiving a wavelength range between 1480 nm and 1500 nm.

**7.** The passive optical network dual-system focusing device according to any of the previous claims, wherein the third transmitting element is capable of emitting a wavelength range between 1300 nm and 1320 nm.

**8.** The passive optical network dual-system focusing device according to any of the previous claims, wherein the fourth transmitting element is capable of emitting a wavelength range between 1260 nm and 1280 nm.

**9.** The passive optical network dual-system focusing device according any of the previous claims, wherein the transmission power between the third transmitting element and the fourth transmitting element is reduced by an attenuation device.

**11.** The passive optical network dual-system focusing device as claimed in any of the previous claims, wherein the outer diameter of the focusing adjustment lens is between 1.3mm and 2.3mm.

**11.** The passive optical network dual-system focusing device as claimed in any of the previous claims, wherein
the length of the focusing adjustment lens is between 1.1mm and 1.7mm,
the distance between the focusing adjustment lens and the optical fiber is between 2mm and 3mm,
the distance between the focusing adjustment lens and the third filter is between 3mm and 4mm,
the distance between the first receiving element and the first filter is between 1.5mm and 2.1mm, and/or
the distance between the second receiving element and the second filter is between 0.9mm and 1.5mm,

**12.** The passive optical network dual-system focusing device as claimed in any of the previous claims, wherein
the distance between the third filter and at least one of the third transmitting element and the fourth transmitting element is between 2mm and 7mm,
the distance between the third filter and the third transmitting element is between 2mm and 3mm,
the distance between the third filter and the fourth transmitting element is between 5mm and 7mm, and/or
the thickness of at least one of the first filter, the second filter, and the third filter is between 0.1mm and 0.3mm.

**13.** The passive optical network dual-system focusing device as claimed in any of the previous claims, wherein the focusing adjustment lens adjusts the optical path of at least one optical signal to at least one of the first receiving element, the second receiving element, the third transmitting element, and the fourth transmitting element.

**14.** The passive optical network dual-system focusing device as claimed in any of the previous claims, wherein the optical guiding unit further comprising a housing, a fiber stub, a sleeve, a stopper, and an OTDR filter, and the fiber passing through the fiber stub and having a light outlet, and the OTDR filter partially connected to the fiber stub and covering the light outlet.

**15.** The passive optical network dual-system focusing device as claimed in the previous claim, wherein
the OTDR filter is installed inside the optical guiding unit and reflects a specific wavelength emitted by the OTDR to detect signals from the optical fiber,
the OTDR filter is made of optical glass,
the size of the OTDR filter is 1.4 mm x 0.6 mm x 0.1 mm,
the end face of the fiber stub is polished at an angle between 4 degrees and 8 degrees, and/or
the first side surface of the OTDR filter faces the light outlet and has a reflective coating layer.
